(19) Europäisches Patentamt
European Patent Office
Office européen des brevets

(11) Veröffentlichungsnummer : **0 037 374**
**B1**

(12) # EUROPÄISCHE PATENTSCHRIFT

(45) Veröffentlichungstag der Patentschrift : **28.12.83**

(51) Int. Cl.$^3$ : **C 09 B 23/10**, D 06 P 1/42

(21) Anmeldenummer : **81810100.8**

(22) Anmeldetag : **16.03.81**

(54) **Methinverbindungen.**

(30) Priorität : **21.03.80 CH 2241/80**

(43) Veröffentlichungstag der Anmeldung : **07.10.81 Patentblatt 81/40**

(45) Bekanntmachung des Hinweises auf die Patenterteilung : **28.12.83 Patentblatt 83/52**

(84) Benannte Vertragsstaaten : **CH DE FR GB LI**

(56) Entgegenhaltungen :
**DE-A- 1 644 674**
**FR-A- 2 123 269**
**GB-A- 2 026 524**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Patentabteilung Postfach**
**CH-4002 Basel (CH)**

(72) Erfinder : **Zink, Rudolf**
**Alemannenstrasse 2**
**CH-4106 Therwil (CH)**

**EP 0 037 374 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Methinverbindungen

Die Erfindung betrifft neue Methinverbindungen, Verfahren zu deren Herstellung sowie deren Verwendung als Farbstoffe zum Färben und Bedrucken von mit kationischen Farbstoffen färbbaren Materialien, vor allem Textilmaterialien.

Es wurden neue Methinverbindungen gefunden, die der allgemeinen Formel I entsprechen :

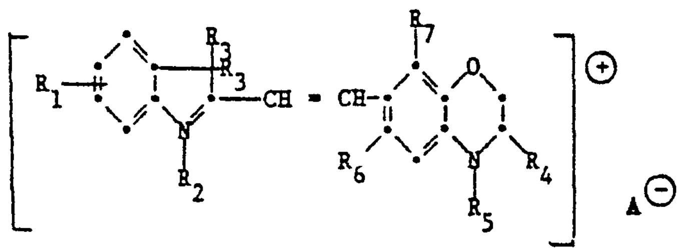

(I)

worin bedeuten

$R_1$ Wasserstoff, $NO_2$, Halogen, gegebenenfalls substituiertes $C_1$-$C_4$-Alkyl oder $C_1$-$C_4$-Alkoxy ;

$R_2$ gegebenenfalls durch CN oder OH substituiertes $C_1$-$C_4$-Alkyl ;

$R_3$ unabhängig voneinander $C_1$-$C_4$-Alkyl ;

$R_4$ Wasserstoff, gegebenenfalls substituiertes $C_1$-$C_4$-Alkyl oder gegebenenfalls substituiertes Aryl ;

$R_5$ gegebenenfalls substituiertes, $C_1$-$C_4$-Alkyl oder $C_3$-$C_4$-Alkenyl ;

$R_6$ und $R_7$ unabhängig voneinander Wasserstoff, $C_1$-$C_4$-Alkyl, $C_1$-$C_4$-Alkoxy oder Halogen, und

A ein Anion.

In bevorzugten Methinverbindungen der Formel I befindet sich der Substituent $R_1$ in p-Stellung zur Stickstoffbindung.

$R_1$ in der Bedeutung von Halogen stellt z. B. das Chlor-, Brom- oder Fluoratom dar ; bedeutet $R_1$ eine unsubstituierte $C_1$-$C_4$-Alkylgruppe so kommen in Frage unverzweigte oder verzweigte Alkylgruppen wie z. B. die Methyl-, Aethyl-, n- und iso-Propyl- und n-, sec.- oder tert.-Butylgruppe ; handelt es sich bei $R_1$ um eine substituierte $C_1$-$C_4$-Alkylgruppe, so kommen als Substituenten vor allem in Betracht : Halogen wie Fluor, Chlor oder Brom und $C_1$-$C_4$-Alkoxy wie die Methoxy-, Aethoxy- oder die Propoxygruppe ; handelt es sich bei $R_1$ um eine $C_1$-$C_4$-Alkoxygruppe, so kommen vor allem unsubstituierte, unverzweigte oder verzweigte Alkoxygruppen, wie die Methoxy-, Aethoxy-, n- oder iso-Propoxygruppe in Frage.

In bevorzugten Methinverbindungen der Formel I bedeutet $R_1$ Halogen, vorzugsweise Chlor und insbesondere Wasserstoff.

$R_2$ in der Bedeutung einer $C_1$-$C_4$-Alkylgruppe stellt eine unverzweigte oder verzweigte Alkylgruppe dar wie z. B. die Methyl-, Aethyl-, n- und iso-Propyl- und n- und iso-Butylgruppe.

In bevorzugten Methinverbindungen der Formel I bedeutet $R_2$ eine unsubstituierte, unverzweigte $C_1$-$C_4$-Alkylgruppe, insbesondere die Methylgruppe.

$R_3$ in der Bedeutung einer $C_1$-$C_4$-Alkylgruppe stellt eine unsubstituierte Alkylgruppe analog derjenigen des Substituenten $R_1$ dar.

In bevorzugten Methinverbindungen der Formel I bedeutet $R_3$ je den gleichen $C_1$-$C_4$-Alkylrest, insbesondere je den Methylrest.

$R_4$ in der Bedeutung einer $C_1$-$C_4$-Alkylgruppe stellt eine unsubstituierte oder substituierte, unverzweigte oder verzweigte Alkylgruppe dar (Methyl-, Aethyl-, n- und iso-Propyl- und n- und iso-Butylgruppe) ; als Substituent kommt vor allem die CN-Gruppe in Frage, in der Bedeutung einer Arylgruppe stellt $R_4$ z. B. den Phenyl- oder α- oder β-Naphthylrest dar, welche Arylreste gegebenenfalls ein- oder mehrmals substituiert sein können durch z. B. Halogen wie Fluor, Chlor oder Brom, durch CN oder durch $C_1$-$C_4$-Alkyl- oder Alkoxygruppen.

In bevorzugten Methinverbindungen der Formel I bedeutet $R_4$ vor allem einen unsubstituierten $C_1$-$C_4$-Alkylrest, vorzugsweise den Methylrest oder Wasserstoff.

Bedeutet $R_5$ eine gegebenenfalls substituierte $C_1$-$C_4$-Alkylgruppe, so kommen als Alkylgruppen unverzweigte und verzweigte Alkylgruppen in Frage, welche ein- oder mehrmals substituiert sein können. Als Substituenten sind beispielsweise genannt :

Phenyl ; Acetoxy ; CN ; Halogen wie Fluor, Chlor oder Brom ; OH ; sowie $C_1$-$C_4$-Alkoxy.

Bedeutet $R_5$ einen $C_3$-$C_4$-Alkenylrest, so sei der Allylrest besonders genannt.

In bevorzugten Methinverbindungen der Formel I stellt $R_5$ eine substituierte $C_1$-$C_4$-Alkylgruppe dar, insbesondere die $-C_2H_4CN$-Gruppe.

Bedeuten $R_6$ und/oder $R_7$ eine $C_1$-$C_4$-Alkylgruppe, so kommen sowohl unverzweigte als auch verzweigte Alkylgruppen (Methyl-, Aethyl-, n- und iso-Propyl- und n- und iso-Butyl) in Frage ; handelt es sich bei $R_6$ und/oder $R_7$ um eine Alkoxygruppe, so stellt diese z. B. eine Methoxy-, Aethoxy-, n- und iso-Propoxy- oder n- und iso-Butoxygruppe dar ; in der Bedeutung eines Halogenatoms stellt $R_6$ und/oder $R_7$ das Fluor-, Chlor- oder Bromatom dar.

In bevorzugten Methinverbindungen der Formel I bedeuten $R_6$ und $R_7$ je Wasserstoff.

A in der Bedeutung eines Anions stellt sowohl organische wie anorganische Ionen dar, z. B. Halogen, wie Chlorid-, Bromid- oder Jodid-, ferner Sulfat-, Methosulfat-, Aminosulfonat, Perchlorat-, Carbonat-, Bicarbonat-, Phosphat-, Phosphormolybdat-, Phosphorwolframat-, Phosphorwolframmolybdat-, Benzosulfonat-, Toluolsulfonat-, 4-Chlorbenzolsulfonat-, Naphthalinsulfonat-, Oxalat-, Maleinat-, Formiat-, Acetat-, Propionat-, Lactat-, Succinat-, Chloracetat-, Tartrat-, Methansulfonat-, Benzoat- und Rhodanidionen oder komplexe Anionen, wie das von Chlorzinkdoppelsalzen oder Tetrafluoroborat.

Besonders wertvoll infolge ihrer guten Lichtechtheit vor allem auf Polyacrylnitrilmaterialien sind die Methinverbindungen der Formel

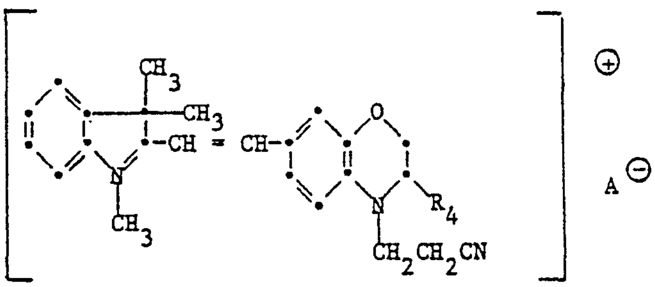

worin $R_4$ die unter Formel I angegebene Bedeutung hat und insbesondere Wasserstoff oder Methyl darstellt.

Die neuen, erfindungsgemässen Methinverbindungen der Formel I können hergestellt werden, indem man 2-Methylenindolin der Formel II

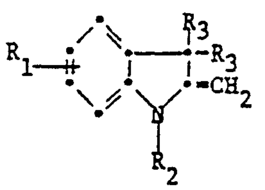

(II)

mit einem Benzomorpholin-7-aldehyd der Formel III

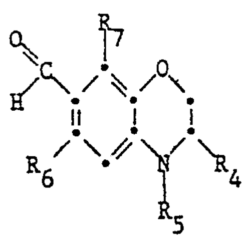

(III)

worin die Symbole $R_1$ bis $R_7$ die unter Formel I angegebene Bedeutung haben in Gegenwart einer Säure HA, worin A den Rest eines Anions bedeutet, kondensiert.

Die Kondensationsreaktion der Methylenverbindung der Formel II mit dem Aldehyd der Formel III erfolgt nach bekannter Art und Weise, z. B. in Eisessig bei einer Temperatur von etwa 0° bis 100 °C. Anstelle von Eisessig kann auch eine andere organische Säure, wie Ameisensäure oder eine Arylsulfonsäure, wie Benzolsulfonsäure, oder auch eine anorganische Säure, wie Salzsäure, Schwefelsäure oder Phosphorsäure, verwendet werden.

Eine andere Möglichkeit der Darstellung der Methinverbindungen der Formel I besteht darin, dass man ein 2-Methylenindolin der Formel II mit einem Benzomorpholin-7-aldehyd der Formel III in einem organischen Lösungsmittel mit wasserabspaltenden Mitteln kondensiert.

Arbeitet man in organischen Lösungsmitteln mit wasserabspaltenden Mitteln so kommen aprotische organische Lösungsmittel in Frage : z. B. aliphatische, gegebenenfalls chlorierte Kohlenwasserstoffe wie Cyclohexan, Methylenchlorid, Chloroform oder Tetrachloräthylen oder aromatische, gegebenenfalls chlorierte Kohlenwasserstoffe wie Toluol, Chlorbenzol oder Dichlorbenzol sowie Ketone und Aether und als wasserabspaltende Mittel z. B. Phosphoroxychlorid und Thionylchlorid.

Nach den Kondensationsreaktionen werden die neuen Methinverbindungen vom Reaktionsmedium getrennt und getrocknet. Falls gewünscht oder erforderlich kann man in den Methinverbindungen der Formel I das Anion A nach bekannter Art und Weise gegen ein anderes Anion austauschen.

Die Ausgangsverbindungen der Formeln II und III sind bekannt oder können nach bekannter Art und Weise hergestellt werden. So werden die Verbindungen der Formel III z. B. erhalten, indem man

ausgehend von den entsprechenden Benzmorpholin Derivaten diese über die Vilsmeier-Reaktion in 7-Stellung formyliert.

Als Indoline der Formel II sind z. B. genannt :

1,3,3-Trimethyl-2-methylen-indolin und 1,3,3-Trimethyl-5-chlor-2-methylen-indolin und als Benzomorpholine der Formel III sind beispielsweise erwähnt :

N-Methyl-3-Methyl-benzomorpholin-7-aldehyd,
N-Methyl-benzomorpholin-7-aldehyd,
N-(β-Cyanäthyl)-3-Methyl-benzomorpholin-7-aldehyd,
N-(β-Hydroxyäthyl)-3-Aethyl-benzomorpholin-7-aldehyd,
N-Allyl-benzomorpholin-aldehyd,
N-β-Cyanäthylbenzomorpholin-7-aldehyd,
3,6-Dimethyl-N-β-cyanäthylbenzomorpholin-7-aldehyd,
N-Aethyl-benzomorpholin-7-aldehyd,
3-Methyl-N-allyl-benzomorpholin-7-aldehyd,
N-Benzyl-benzomorpholin-7-aldehyd,
N-β-Chloräthyl-benzomorpholin-7-aldehyd, und
3-Methyl-6-chlor-N-äthyl-benzomorpholin-7-aldehyd.

Verwendung finden die erfindungsgemässen Methinverbindungen der Formel I vor allem als Farbstoffe zum Färben und unter Zusatz von Bindemittel zum Bedrucken von mit kationischen Farbstoffen anfärbbaren Materialien, insbesondere Textilmaterialien, die z. B. vorteilhaft aus Homo- oder Mischpolymerisaten des Acylnitrils bestehen, oder synthetische Polyamide oder Polyester, welche durch saure Gruppen modifiziert sind. Des weiteren dienen die neuen Methinverbindungen auch zum Färben von Nasskabel, Kunststoffmassen, Leder und Papier. Man färbt vorzugsweise aus wässrigem, neutralen oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware, wie Hemden und Pullover.

Schliesslich können die neuen Methinverbindungen der Formel I, auch im Transferdruck eingesetzt werden.

Durch die Applikation der Farbstoffe lassen sich sehr brillante, rote Färbungen bzw. Drucke insbesondere auf Polyacrylnitrilmaterialien herstellen, die sich durch sehr gute Allgemeinechtheiten vor allem durch eine gute Lichtechtheit auszeichnen. Die Erzielung brillanter Nuancen in Kombination mit einer guten Lichtechtheit der Ausfärbung ist überraschend.

Gegenüber den beispielhaft belegten Farbstoffen aus der FR-A-2,123,269 weisen die erfindungsgemässen Farbstoffe unerwartet eine bessere Lichtechtheit auf.

Diejenigen Methinverbindungen der Formel I, welche eine gute Löslichkeit in organischen Lösungsmitteln, wie z. B. Perchloräthylen besitzen, sind auch zum Färben der genannten Textilmaterialien oder zum Färben von z. B. plastischen Massen aus organischen Medien geeignet.

In den folgenden Beispielen die der Erläuterung der Erfindung dienen, bedeuten Teile (T) Gewichtsteile, die Prozente Gewichtsprozente und die Temperaturen sind in Celsiusgraden angegeben.

Beispiel 1

Man löst 5,75 T 3-Methyl-N-β-cyanäthylbenzomorpholin-7-aldehyd in 15 T Eisessig, gibt 4,33 T 1,3,3-Trimethyl-2-methylenindolin zu und rührt das Gemisch während 21 Stunden bei 40-42°. Nun versetzt man mit 80 T Wasser von 20° und klärt mit Aktivkohle über ein Filterhilfsmittel. Die geklärte Lösung tropft man auf eine Mischung von 30 T Eis, 17 T Salzsäure 30 % und 1,7 T Zinkchlorid bei max. 10°. Das Farbsalz der Formel

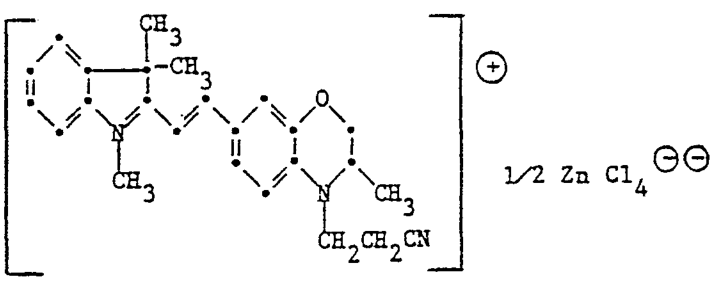

fällt kristallin aus und wird abfiltriert. Nach dem Trocknen im Vakuum bei 70° erhält man 12 T eines roten Farbstoffes, welcher Polyacrylnitrilfasern in brillanten, blaustichigroten Tönen mit guten Echtheiten färbt.

Weitere wertvolle Farbstoffe erhält man, wenn man analog obigem Beispiel arbeitet, jedoch äquivalente Mengen der in Tabelle I aufgeführten Indolin- resp. Benzomorpholinverbindungen einsetzt. Die erhaltenen Methinverbindungen (Zinkchloridsalze) sind in der 4. Kolonne der Tabelle angegeben.

Tabelle

| 1 | 2 | 3 | 4 | 5 |
|---|---|---|---|---|
| Nr. | Indolin-verbindung | Benzomorpholin-verbindung | Methinverbindung | Nuance auf Polyacrylnitril |
| 2 | 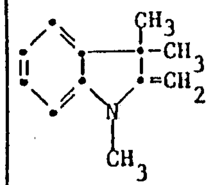 | 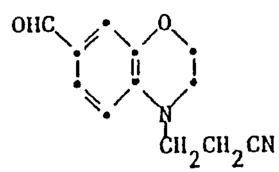 | 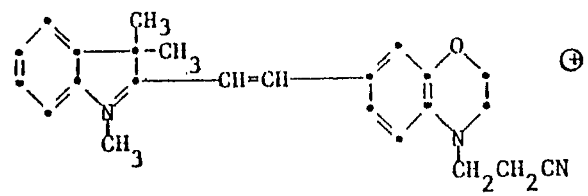 | Brillant-rosa |
| 3 | do. | 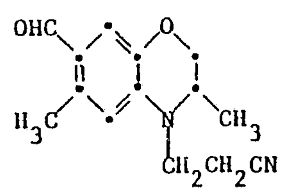 | 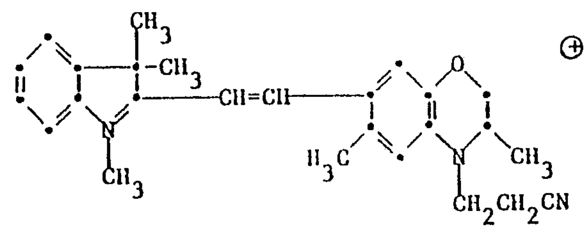 | Brillant-rot |
| 4 | do. | 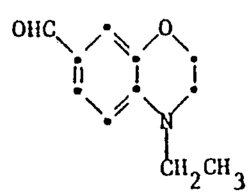 | 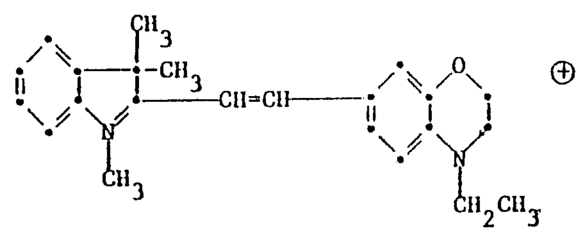 | do. |

Tabelle (Fortsetzung)

| 1 | 2 | 3 | 4 | 5 |
|---|---|---|---|---|
| Nr. | Indolin-verbindung | Benzomorpholin-verbindung | Methinverbindung | Nuance auf Polyacrylnitryl |
| 5 | 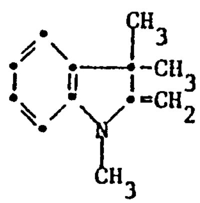 | 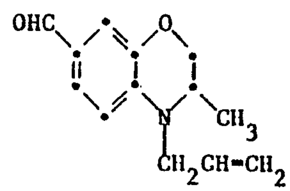 | 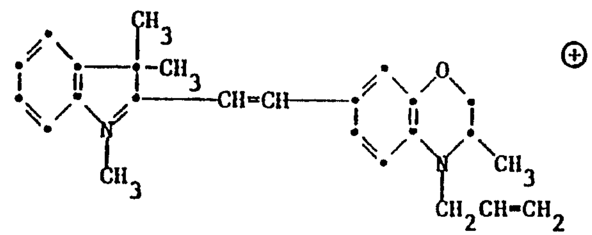 | Brillant-rot |
| 6 | do. | 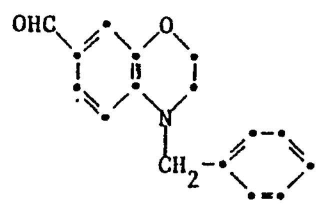 | 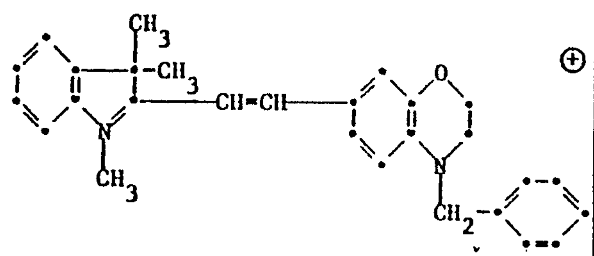 | do. |
| 7 | do. | 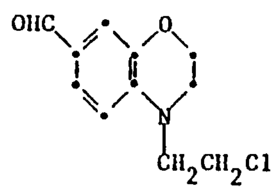 | 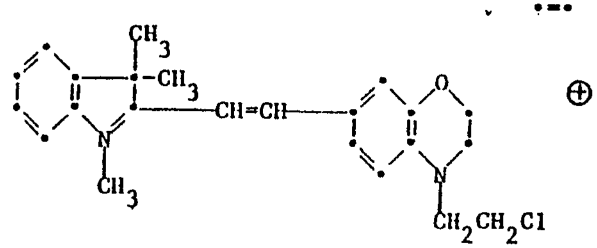 | do. |

Tabelle (Fortsetzung)

| 1<br>Nr. | 2<br>Indolin-verbindung | 3<br>Benzomorpholin-verbindung | 4<br>Methinverbindung | 5<br>Nuance auf Polyacrylnitril |
|---|---|---|---|---|
| 8 | 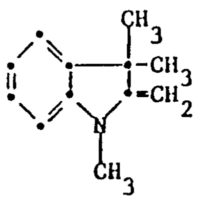 | 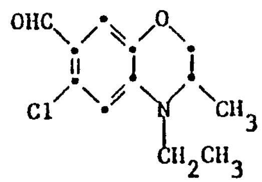 | 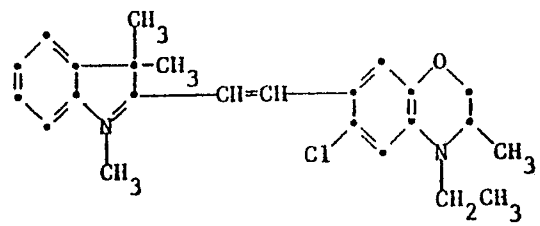 | Brillant-rot |
| 9 | 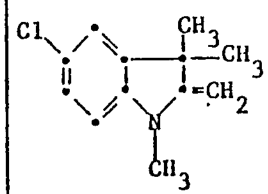 | 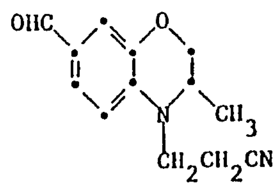 | 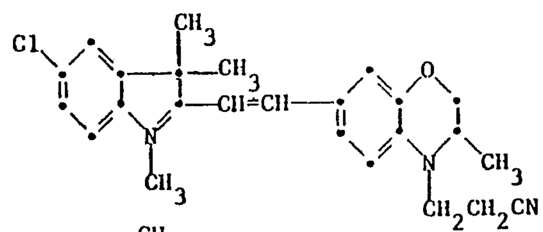 | do. |
| 10 | 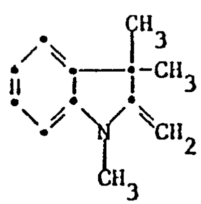 | 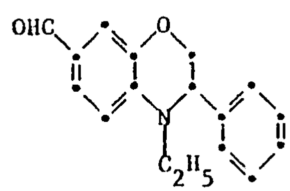 | 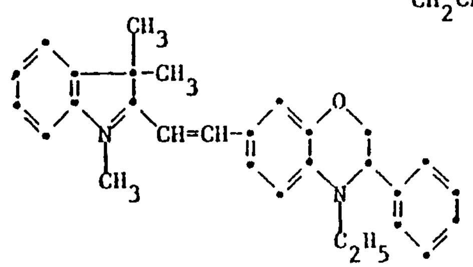 | do. |

Tabelle (Fortsetzung)

| 1 | 2 | 3 | 4 | 5 |
|---|---|---|---|---|
| Nr. | Indolin-verbindung | Benzomorpholin-verbindung | Methinverbindung | Nuance auf Polyacrylnitril |
| 11 | 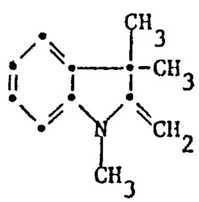 | 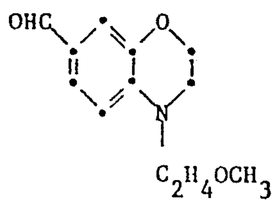 | 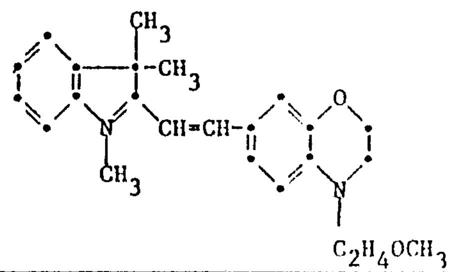 | Brillantrot |

Beispiel 12

5 g des gemäss Beispiel 1 hergestellten kationischen Farbstoffes werden mit 2 g 40 %iger Essigsäure angeteigt und durch Zugabe von 4 000 g heissem Wasser in Lösung gebracht. Man setzt noch 1 g Natriumacetat und 2 g eines mit Dimethylsulfat quaternierten Anlagerungsproduktes von 15 bis 20 Aequivalenten Aethylenoxyd an N-Octadecyldiäthylentriamin zu und geht mit 100 g Polyacrylnitrilgewebe bei 60° ein. Innerhalb 30 Minuten erhitzt man das Bad auf 100° und färbt dann kochend während 90 Minuten. Hierauf lässt man die Flotte im Verlauf von 30 Minuten bis auf 60° abkühlen. Das so gefärbte Material wird dann herausgenommen und anschliessend mit lauwarmem und kaltem Wasser gespült. Man erhält eine brillante blaustichig rote Polyacrylnitrilfärbung, die sehr lichtecht ist.

Beispiel 13

Ein Polyacrylnitril-Mischpolymerisat, bestehend aus 93 % Acrylnitril und 7 % Vinylacetat wird in Dimethylacetamid zu 15 % gelöst. Die Spinnflüssigkeit wird in ein Spinnbad extrudiert, welches aus 40 % Dimethylacetamid und 60 % Wasser besteht. Anschliessend wird das entstandene Spinnkabel nach bekannten Methoden verstreckt und durch Spülen mit heissem und kaltem Wasser von Dimethylacetamid befreit.

Dieses nasse Spinnkabel wird durch Tauchen in einem Bad von 42° folgender Zusammensetzung gefärbt :

9 g/l Farbstoff gemäss Beispiel 1
pH 4,5 mit Essigsäure

Die Kontaktzeit Faserkabel/Färbeflotte beträgt 2 Sekunden. Anschliessend wird die überschüssige Farbflotte abgequetscht und das Spinnkabel dem Trockner zugeführt. Es resultiert ein brillant blaustichig rot gefärbtes Faserkabel mit sehr guten Lichtechtheiten.

**Ansprüche**

1. Methinverbindungen der Formel I

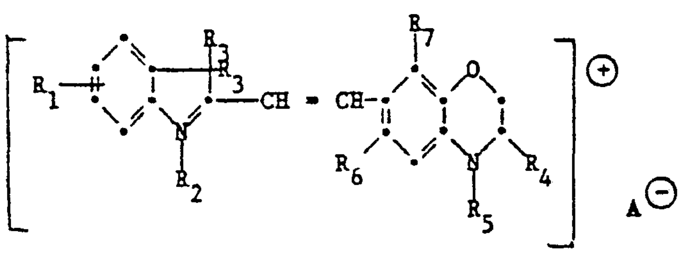

(I)

worin bedeuten

$R_1$ Wasserstoff, $NO_2$, Halogen, gegebenenfalls substituiertes $C_1$-$C_4$-Alkyl oder $C_1$-$C_4$-Alkoxy ;
$R_2$ gegebenenfalls durch CN oder OH substituiertes $C_1$-$C_4$-Alkyl ;
$R_3$ unabhängig voneinander $C_1$-$C_4$-Alkyl ;
$R_4$ Wasserstoff, gegebenenfalls substituiertes $C_1$-$C_4$-Alkyl oder gegebenenfalls substituiertes Aryl ;
$R_5$ gegebenenfalls substituiertes, $C_1$-$C_4$-Alkyl oder $C_3$-$C_4$-Alkenyl ;
$R_6$ und $R_7$ unabhängig voneinander Wasserstoff, $C_1$-$C_4$-Alkyl, $C_1$-$C_4$-Alkoxy oder Halogen, und
A ein Anion.

2. Methinverbindungen gemäss Anspruch 1, dadurch gekennzeichnet, dass der Substituent $R_1$ in p-Stellung zur Stickstoffbindung steht.

3. Methinverbindungen gemäss Anspruch 1, dadurch gekennzeichnet, dass $R_1$ Wasserstoff oder Halogen bedeutet.

4. Methinverbindungen gemäss Anspruch 3, dadurch gekennzeichnet, dass $R_1$ Wasserstoff bedeutet.

5. Methinverbindungen gemäss Anspruch 1, dadurch gekennzeichnet, dass $R_2$ unsubstituiertes $C_1$-$C_4$-Alkyl bedeutet.

6. Methinverbindungen gemäss Anspruch 5, dadurch gekennzeichnet, dass $R_2$ Methyl bedeutet.

7. Methinverbindungen gemäss Anspruch 1, dadurch gekennzeichnet, dass $R_3$ je den gleichen $C_1$-$C_4$-Alkylrest bedeutet.

8. Methinverbindungen gemäss Anspruch 7, dadurch gekennzeichnet, dass $R_3$ je den Methylrest bedeutet.

9. Methinverbindungen gemäss Anspruch 1, dadurch gekennzeichnet, dass $R_4$ einen unsubstituierten $C_1$-$C_4$-Alkylrest oder Wasserstoff bedeutet.

10. Methinverbindungen gemäss Anspruch 9, dadurch gekennzeichnet, dass $R_4$ den Methylrest bedeutet.

11. Methinverbindungen gemäss Anspruch 1, dadurch gekennzeichnet, dass $R_5$ eine substituierte $C_1$-$C_4$-Alkylgruppe darstellt.

12. Methinverbindungen gemäss Anspruch 11, dadurch gekennzeichnet, dass $R_5$ die $-C_2H_4CN$ Gruppe darstellt.

13. Methinverbindungen gemäss Anspruch 1, dadurch gekennzeichnet, dass $R_6$ und $R_7$ je Wasserstoff bedeuten.

14. Methinverbindungen gemäss Anspruch 1, dadurch gekennzeichnet, dass $R_1$ Wasserstoff oder Chlor, $R_2$ und $R_3$ je Methyl, $R_4$ Wasserstoff, Methyl oder Phenyl, $R_5$ Methyl oder Aethyl gegebenenfalls substituiert durch CN, Chlor, Methoxy oder Phenyl oder den Allyl-Rest, $R_6$ Wasserstoff, Chlor oder Methyl und $R_7$ Wasserstoff bedeuten.

15. Methinverbindungen gemäss Anspruch 1 der Formel

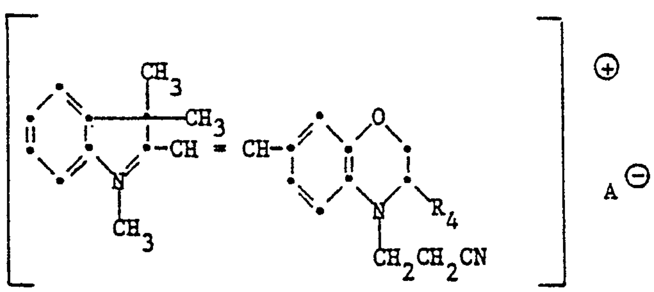

worin $R_4$ die unter Formel I angegebene Bedeutung hat und insbesondere Wasserstoff oder Methyl darstellt.

16. Verfahren zur Herstellung von Methinverbindungen der Formel I gemäss Anspruch 1, dadurch gekennzeichnet, dass man 2-Methylenindolin der Formel II

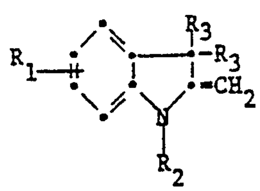

(II)

mit einem Benzomorpholin-7-aldehyd der Formel III

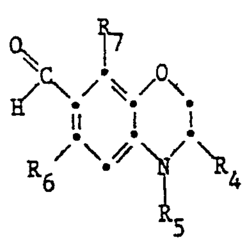

(III)

worin die Symbole $R_1$ bis $R_7$ die im Anspruch 1 angegebene Bedeutung haben in Gegenwart einer Säure HA, worin A den Rest eines Anions bedeutet, kondensiert.

17. Verwendung der Methinverbindungen gemäss den Ansprüchen 1 bis 15 oder der gemäss dem Verfahren des Anspruches 16 erhaltenen Methinverbindungen als Farbstoffe zum Färben und Bedrucken von mit kationischen Farbstoffen anfärbbaren Materialien, insbesondere Textilmaterialien.

18. Verwendung gemäss Anspruch 17 zum Färben und Bedrucken von Polyacrylnitrilmaterialien oder von sauer modifizierten Polyamid- oder Polyestermaterialien.

19. Das mit den Methinverbindungen der Formel I gemäss Anspruch 1 gefärbte oder bedruckte Material.

**Claims**

1. A methine compound of the formula I

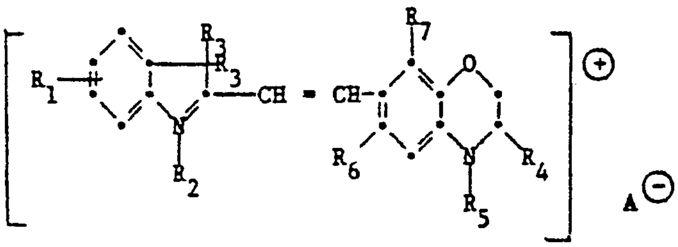

(I)

wherein

$R_1$ is hydrogen, $NO_2$, halogen, unsubstituted or substituted $C_1$-$C_4$-alkyl, or it is $C_1$-$C_4$-Alkoxy,

$R_2$ is $C_1$-$C_4$-alkyl unsubstituted or substituted by CN or OH,

$R_3$ independently of one another are each $C_1$-$C_4$-alkyl,

$R_4$ is hydrogen, unsubstituted or substituted $C_1$-$C_4$-alkyl or unsubstituted or substituted aryl,

$R_5$ is unsubstituted or substituted $C_1$-$C_4$-alkyl, or it is $C_3$-$C_4$-alkenyl,

$R_6$ and $R_7$ independently of one another are each hydrogen, $C_1$-$C_4$-alkyl, $C_1$-$C_4$-alkoxy or halogen, and

A is an anion.

2. A methine compound according to Claim 1, wherein the substituent $R_1$ is in the p-position with respect to the nitrogen bond.

3. A methine compound according to Claim 1, wherein $R_1$ is hydrogen or halogen.

4. A methine compound according to Claim 3, wherein $R_1$ is hydrogen.

5. A methine compound according to Claim 1, wherein $R_2$ is unsubstituted $C_1$-$C_4$-alkyl.

6. A methine compound according to Claim 5, wherein $R_2$ is methyl.

7. A methine compound according to Claim 1, wherein the $R_3$'s are each the same $C_1$-$C_4$-alkyl group.

8. A methine compound according to Claim 7, wherein each $R_3$ is the methyl group.

9. A methine compound according to Claim 1, wherein $R_4$ is an unsubstituted $C_1$-$C_4$-alkyl group or hydrogen.

10. A methine compound according to Claim 9, wherein $R_4$ is the methyl group.

11. A methine compound according to Claim 1, wherein $R_5$ is a substituted $C_1$-$C_4$-alkyl group.

12. A methine compound according to Claim 11, wherein $R_5$ is the $-C_2H_4CN$ group.

13. A methine compound according to Claim 1, wherein $R_6$ and $R_7$ are each hydrogen.

14. A methine compound according to Claim 1, wherein $R_1$ is hydrogen or chlorine, $R_2$ and $R_3$ are each methyl, $R_4$ is hydrogen, methyl or phenyl, $R_5$ is methyl or ethyl optionally substituted by CN, chlorine, methoxy or phenyl, or $R_5$ is the allyl group, $R_6$ is hydrogen, chlorine or methyl, and $R_7$ is hydrogen.

15. A methine compound according to Claim 1 of the formula

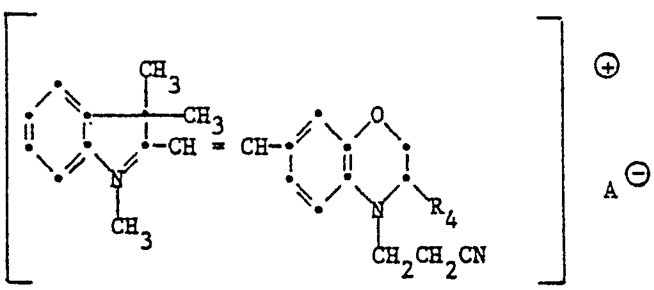

wherein $R_4$ has the meaning defined under the formula I and is especially hydrogen or methyl.

16. A process for producing a methine compound of the formula I according to Claim 1, which process comprises condensing 2-methyleneindoline of the formula II

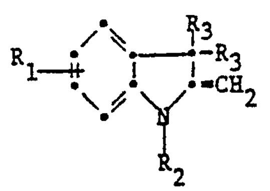

(II)

with a benzomorpholine-7-aldehyde of the formula III

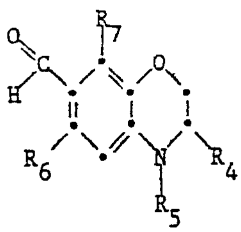

(III)

wherein the symbols $R_1$ to $R_7$ have the meanings defined in Claim 1, in the presence of an acid HA, in which A is an anion.

17. Use of the methine compounds according to Claims 1 to 15 inclusive or of the methine compounds obtained by the process of Claim 16 as dyes for dyeing and printing materials which can be dyed with cationic dyes, especially textile materials.

18. Use according to Claim 17 for dyeing and printing polyacrylonitrile materials or acid modified polyamide or polyester materials.

19. The material dyed or printed with a methine compound of the formula I according to Claim 1.

**Revendications**

1. Composés méthiniques de formule I

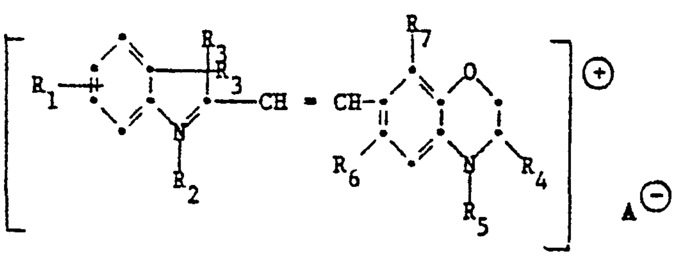

(I)

dans laquelle

$R_1$ désigne de l'hydrogène, $NO_2$, de l'halogène, un groupe $C_1$-$C_4$-alkyle éventuellement substitué ou $C_1$-$C_4$-alcoxy ;

$R_2$ désigne un groupe $C_1$-$C_4$-alkyle éventuellement substitué par CN ou OH :

$R_3$ indépendamment l'un de l'autre désignent chacun un groupe $C_1$-$C_4$-alkyle ;

$R_4$ désigne de l'hydrogène, un groupe $C_1$-$C_4$-alkyle éventuellement substitué ou aryle éventuellement substitué ;

$R_5$ désigne un groupe $C_1$-$C_4$-alkyle éventuellement substitué ou $C_3$-$C_4$-alcényle ;

$R_6$ et $R_7$ indépendamment l'un de l'autre désignent chacun de l'hydrogène, un groupe $C_1$-$C_4$-alkyle, $C_1$-$C_4$-alcoxy ou de l'halogène, et

A est un anion.

2. Composés méthiniques selon la revendication 1, caractérisés par le fait que le substituant $R_1$ est en position para par rapport à la liaison azote.

3. Composés méthiniques selon la revendication 1, caractérisés par le fait que $R_1$ désigne de l'hydrogène ou de l'halogène.

4. Composés méthiniques selon la revendication 3, caractérisés par le fait que $R_1$ désigne de l'hydrogène.

5. Composés méthiniques selon la revendication 1, caractérisés par le fait que $R_2$ désigne un groupe $C_1$-$C_4$-alkyle non substitué.

6. Composés méthiniques selon la revendication 5, caractérisés par le fait que $R_2$ désigne le groupe méthyle.

7. Composés méthiniques selon la revendication 1, caractérisés par le fait que chaque $R_3$ désigne le même reste $C_1$-$C_4$-alkyle.

8. Composés méthiniques selon la revendication 7, caractérisés par le fait que chaque $R_3$ désigne le reste méthyle.

9. Composés méthiniques selon la revendication 1, caractérisés par le fait que $R_4$ désigne un reste $C_1$-$C_4$-alkyle non substitué ou de l'hydrogène.

10. Composés méthiniques selon la revendication 9, caractérisés par le fait que $R_4$ désigne le reste méthyle.

11. Composés méthiniques selon la revendication 1, caractérisés par le fait que $R_5$ représente un groupe $C_1$-$C_4$-alkyle substitué.

12. Composés méthiniques selon la revendication 11, caractérisés par le fait que $R_5$ représente le groupe $—C_2H_4CN$.

13. Composés méthiniques selon la revendication 1, caractérisés par le fait que $R_6$ et $R_7$ représentent chacun de l'hydrogène.

14. Composés méthiniques selon la revendication 1, caractérisés par le fait que $R_1$ est de l'hydrogène ou du chlore ; $R_2$ et $R_3$ sont chacun un groupe méthyle, $R_4$ est de l'hydrogène, un groupe méthyle ou phényle, $R_5$ est un groupe méthyle ou éthyle éventuellement substitué par CN, du chlore, un radical méthoxy ou phényle ou le reste allyle ; $R_6$ est de l'hydrogène, du chlore ou le reste méthyle ; et $R_7$ est de l'hydrogène.

15. Composés méthiniques selon la revendication 1, ayant la formule

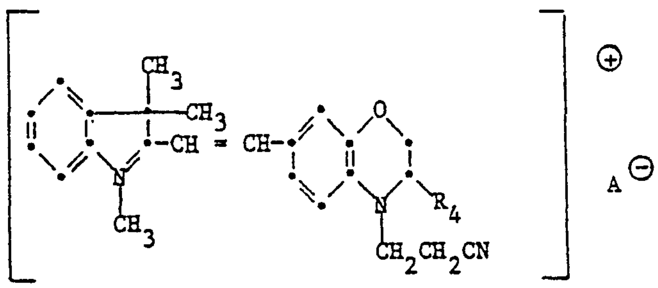

dans laquelle $R_4$ a la signification donnée sous la formule I et, en particulier représente l'hydrogène ou le groupe méthyle.

16. Procédé pour la préparation de composés méthiniques de formule I selon la revendication 1, caractérisé par le fait qu'on condense une 2-méthylène-indoline de formule II

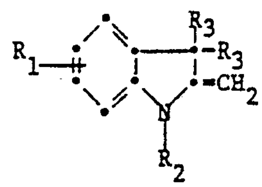

(II)

avec un benzomorpholine-7-aldéhyde de formule III

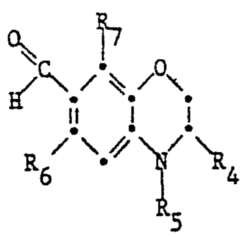

(III)

dans lesquelles les symboles $R_1$ à $R_7$ ont les significations données dans la revendication 1, en présence d'un acide HA, où A est le reste d'un anion.

17. Utilisation des composés méthiniques selon les revendications 1 à 15, ou des composés méthiniques obtenus selon le procédé de la revendication 16, comme colorants pour teindre et imprimer des matières pouvant être teintes avec des colorants cationiques, en particulier des matières textiles.

18. Utilisation selon la revendication 17 pour la teinture et l'impression de matières en polyacrylonitrile ou de matières en polyamide ou en polyester modifiés par un acide.

19. La matière teinte ou imprimée avec les composés méthiniques de formule I selon la revendication 1.